# EUROPEAN PATENT SPECIFICATION

(11) **EP 0 935 126 B1**
(45) Date of publication and mention of the grant of the patent: **18.01.2012**
(21) Application number: 98123924.7
(22) Date of filing: 16.12.1998
(51) Int. Cl.: G01F 23/00, G01F 23/26

(54) **Liquid level gauge for use on vehicle**
Flüssigkeitsspiegelanzeiger zum Gebrauch in einem Fahrzeug
Jauge de niveau de liquide à utiliser dans un véhicule

(30) Priority: 30.01.1998 JP 3381098
(43) Date of publication of application: 11.08.1999
(73) Proprietor: HONDA GIKEN KOGYO KABUSHIKI KAISHA, Minato-ku Tokyo (JP)
(72) Inventor: Yoshida, Susumu c/o K.K. Honda Gijutsu Kenkyusho, Wako-shi, Saitama (JP)
(74) Representative: Liska, Horst

(56) References cited:
- EP-A- 0 275 240
- US-A- 4 470 296
- PATENT ABSTRACTS OF JAPAN vol. 014, no. 004 (P-986), 9 January 1990 & JP 01 257222 A (YAZAKI CORP), 13 October 1989

## Description

### DETAILED DESCRIPTION OF THE INVENTION

### Industrial Field of Utilization

The present invention relates generally to a liquid level gauge for use on a vehicle and, more particularly, to a liquid level gauge for indicating a liquid level in a tank on board a vehicle at response rates corresponding to the current speed of the vehicle on a real time basis.

### Prior Art

Heretofore, a number of proposals have been made regarding liquid level gauges for indicating the remaining quantity of a liquid such as fuel held in a tank mounted on board a vehicle. Illustratively, Japanese Published Examined Patent Application No. Sho 60-1567 discloses the following proposals: detect a remaining fuel quantity in a fuel tank of a vehicle in terms of interelectrode capacitance, convert the detected value of interelectrode capacitance into an oscillation frequency of an RC oscillator, change time intervals at which to measure a pulse count of the oscillation frequency between a stopped and a running state of the vehicle, and have the remaining fuel quantity indicated on an indicator on the basis of an average of the measured pulse counts. The cited patent also includes the following proposals: use a float-equipped potentiometer type or a wire wound resistor type level gauge to detect the remaining fuel quantity in the fuel tank, cause remaining quantity detection signals in analog form from the level gauge to be input to an integrator for integration using different time constants between the stopped and the running state of the vehicle, and have the remaining fuel quantity indicated on the indicator on the basis of the integrated value. In the stopped state of the vehicle, according to the disclosure above, the intervals at which to measure the pulse count are shortened and a shorter time constant is used on the integrator. In the running state of the vehicle, the measuring intervals are prolonged and a longer time interval is used on the integrator. These arrangements apparently allow the remaining fuel quantity to be indicated in a short time in the stopped state of the vehicle while permitting remaining fuel quantity indications through effective absorption of fuel level fluctuations while the vehicle is running.

US4470296 discloses a liquid level gauge for use on a vehicle, in which a relatively long averaging interval is used when the vehicle is moving, and a relatively short interval is used when the vehicle is not moving. The time period for calculating the liquid level value is changed depending on the vehicle speed, while the updating intervals of the indication remain constant.

### Problems to be Solved by the Invention

Conventional level gauges such as the one outlined above always employ integrated values for indication purposes. This makes it inevitable for averaging operations and the concomitant time lags to be introduced between the actual and the indicated remaining quantity. That is, the currently indicated remaining quantity merely represents an average of the quantities measured between dozens of seconds ago and a few minutes ago; the value on the indicator is not the actually remaining quantity being measured in real time.

Two-wheel vehicles (simply called the vehicle hereunder), when parked, generally have their side stand extended for support. When started to go on the road, the vehicle has its side stand folded off the ground to run in upright posture. Between the parked state (side stand extended) and the running state (side stand folded), the level in the fuel tank of the vehicle fluctuates and is often indicated as different values on the fuel indicator.

Motorcyclists sometimes start off in a very short time after uprighting their vehicle from the parked position. In that short time period before the activation, the vehicle is required to indicate on an indicator a precise fuel level measured in upright posture.

The above-described conventional type of level gauge, however, involves having a large number of actual liquid level measurements admitted and averaged. The process necessarily entails delays before the fluctuating liquid level is averaged and indicated on the indicator. In such cases, the motorcyclist starts off after checking the fuel level of the vehicle in its parked state with the side stand extended (or the fuel level in effect while the vehicle is being uprighted from its parked state, the side stand folded); the motorcyclist must check again the fuel level while the vehicle is subsequently running in upright posture.

An attempt to circumvent such inconveniences is provided illustratively by a method of minimizing the averaging operation and the concomitant time lags between the actual and the indicated level, with time constants reduced to very small, almost negligible values. Such a method entails another problem: infinitesimal fluctuations of the liquid level can be picked up and presented as level indications that change too rapidly to be read meaningfully.

In addition, conventional level gauges are required to have three circuits: one for the larger time constant, another for the smaller time constant, and the other for switching the two time constant circuits. The requirements complicate the circuitry.

An attempt to bypass the disadvantage above has been made by simply replacing the three-circuit makeup with a conventional averaging circuit that performs averaging based illustratively on digital sampling. This method requires switching between two averaging processes: one for totaling measurements taken in a relatively short time period of refueling, the other for totaling a large number of measurements taken over an extended period of time in the running state. As such, the method has failed to avert the complicated operating processes. In particular, the fact that the length to be averaged fluctuates, i.e., the population parameter for the division is varied, works against simplifying the operations involved. This is because the averaging requires division.

It is therefore an object of the present invention to overcome the above and other deficiencies and disadvantages of the prior art and to provide a liquid level gauge for use on a vehicle, the gauge indicating a liquid level on the vehicle in a start-up and a running state in accordance with requirements designated by a user of the vehicle, the level being indicated with little or no time lag.

### Means for Solving the Problems

In carrying out the invention and according to a first aspect thereof, there is provided a motorcycle having a liquid level gauge according to claim 1.

In a first preferred structure according to the invention, the intervals at which to update data indicated on the liquid level indicating means are one second at most when the speed of the vehicle is less than five kilometers per hour, and are between five and sixty seconds when the speed of the vehicle is at least five kilometers per hour. In a second preferred structure according to the invention, at least the vehicle speed judging means, the indicator driving means and the liquid level indicating means are housed in a case which accommodates a speedometer.

The invention when embodied according to the first aspect of the invention provides a liquid level gauge with little time lag in data indication on board the vehicle. That is, the inventive gauge allows the liquid level indicating means to indicate, in real time or with a negligible time lag, liquid level data derived from the detection signals generated by the liquid level detecting means. The first preferred structure of the invention permits updating of liquid level data in less than one second if fuel level fluctuations are sufficiently small. This makes it possible to indicate precise level data in a suitably timed manner as required by the user of the vehicle. Furthermore, the second preferred structure implements the inventive liquid level gauge with a minimum number of components. This reduces the assembling cost of the gauge.

### Effects of the Invention

As described, the inventive liquid level gauge for use on a vehicle indicates liquid level data on an indicator in real time or with a negligible time lag in a suitably timed manner as required by the user of the vehicle. In particular, if the motorcyclist uprights the vehicle from the parked position to start off in a very short time period, the exact fuel level measured in the upright position is indicated on the indicator by the time the vehicle starts traveling. This allows the motorcyclist to trust the indication as the precise quantity of the remaining fuel in the vehicle.

The major components of the inventive gauge are incorporated in the casing of the speedometer. This makes it possible to mount the level gauge made of a limited number of components on the vehicle at a reduced assembling cost.

### BRIEF DESCRIPTION OF THE DRAWINGS

Fig. 1 is a block diagram showing a typical constitution of the first embodiment of the invention;
Fig. 2 is a flowchart of steps in which the first embodiment operates;
Fig. 3 is a block diagram showing a typical constitution of the second embodiment of the invention;
Fig. 4 is a flowchart of steps in which the second embodiment operates; and
Fig. 5 is a front view of an instrument panel including the inventive fuel level indicator, along with a sketch outlining the shape of a circuit board for a speedometer.

### Preferred Embodiments

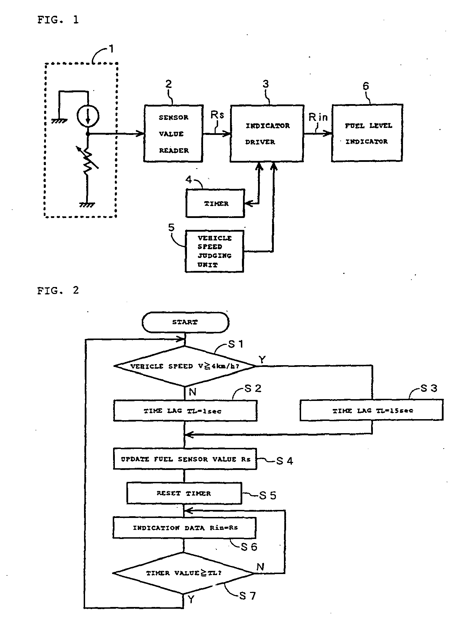

Preferred embodiments of this invention will now be described in detail with reference to the accompanying drawings. Fig. 1 is a block diagram of one preferred embodiment of the invention.

A fuel sensor 1 is of a known type: either a float-equipped potentiometer type or a wire wound resistor type liquid level gauge. This liquid level gauge combines a float and a brush integrally, the float floating on the liquid surface, the brush sliding along a resistor element. When the liquid level fluctuates, the float changes its position causing the brush to move along the resistor element. The moving brush varies the resistance value of the potentiometer or wire wound resistor. If a constant current is allowed to flow through the resistor element, the varying resistance value of the resistor element translates into output voltage variations that are output as detection signals. The fuel sensor 1 is not limited to the above-described types. Any other type of fuel sensor may be used.

The detection signals, i.e., voltage signals from the fuel sensor 1 are input to a sensor value reader 2. The sensor value reader 2 converts the analog voltage signals to digital form. An indicator driver 3 comprises a nonvolatile memory (e.g., ROM) that holds a predetermined program, a CPU that operates according to that program, a RAM, and an I/O unit. The indicator driver 3 receives voltage signals in digital form from the sensor value reader 2, time signals from a timer 4, and vehicle speed signals from a vehicle speed judging unit 5, thereby generating liquid level data for indication. The indication data thus generated is retained temporarily in the RAM or the like. Subsequently, the indication data is transmitted to a fuel level indicator 6 through the I/O unit of the indicator driver 3. The timer 4 may be an internal clock of the indicator driver 3 or may be externally provided. The vehicle speed judging unit 5 may tap into the capability of vehicle speed judging means used by a speedometer of the vehicle.

How the indicator driver 3 works will now be described with reference to the flowchart of Fig. 2. In step S1, a check is made to see if a vehicle speed V is at least 4 km/h based on the data from the vehicle speed judging unit 5. If the result of the check in step S1 is negative, step S2 is reached in which a time lag TL is set for one second. If the vehicle speed V is found to be at least 4 km/h, step S3 is reached in which the time lag TL is set for 15 seconds. The rationale for checking in step S1 to see if the vehicle speed V is at least 4 km/h is as follows: if the vehicle is at most traveling as fast as a man walking (about 4 km/h), then the fuel level fluctuations in the vehicle are considered small and germane to precise level indications at short reading intervals (i.e., step S2 is reached in which the time lag TL is set for one second).

In step S4, data Rs detected by the fuel sensor 1 is read from the sensor value reader 2 and retained illustratively in the RAM. In step S5, the timer 4 is reset. In step S6, a value based on the detected value Rs above is set as indication data Rin on the fuel level indicator 6. The value on the fuel level indicator 6 is thus updated and replaced by the data Rs.

In step S7, a check is made to see if the timer 4 has counted up to the end of the time lag TL. If the result of the check in step S7 is negative, step S6 is reached and the indication data Rin = Rs is maintained. If the timer 4 is found to have counted up to the end of the time lag TL, step S1 is reached again and the process is repeated.

As described, the embodiment above permits indications of fuel levels with no time lag at intervals of one second if the vehicle speed is less than 4 km/h, and at intervals of 15 seconds if the vehicle speed is at least 4 km/h. Even if the motorcyclist uprights the vehicle from the parked position (with the side stand extended) to start off in a very short time period, the fuel level measured in the upright position is indicated on the fuel level indicator 6 by the time the vehicle is traveling. This allows the motorcyclist to verify the exact fuel level before going on the road.

While the vehicle is running at speeds at least 4 km/h, the fuel level indication is updated at intervals of 15 seconds. Fuel level fluctuations caused by the bumpy road surface are thus averaged over time. Fuel levels thus averaged are indicated without recourse to the conventional averaging process based on time-consuming calculations. Because the level indication does not change at inordinately short intervals, the motorcyclist can ascertain the fuel level in an unhurried manner while riding the vehicle.

Although the above embodiment sets the time lag TL for one second if the vehicle speed V is less than 4 km/h and for 15 seconds if the speed is at least 4 km/h, this is not limitative of the invention. A variation of the embodiment may set the time lag TL for one second when the vehicle speed V is less than 5 km/h and for 15 seconds when the speed is at least 5 km/h.

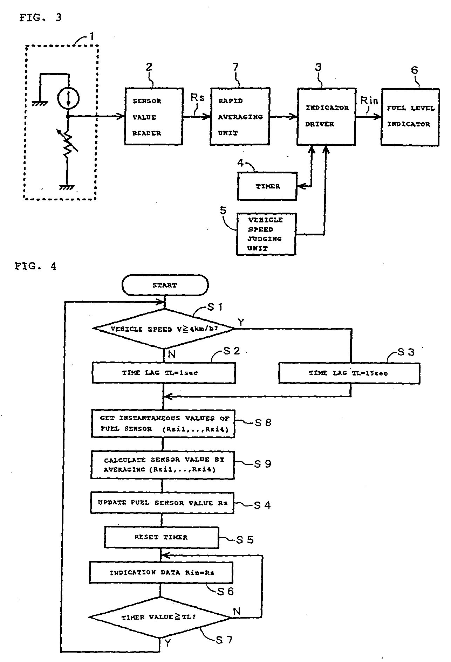

A second embodiment of this invention will now be described with reference to Figs. 3 and 4. Fig. 3 is a block diagram of the second embodiment, and Fig. 4 is a flowchart of steps in which the second embodiment typically operates. In Figs. 3 and 4, like reference characters designate like or corresponding parts or steps already shown in Figs. 1 and 2. The second embodiment differs from the first embodiment in two points: a rapid averaging unit 7 is interposed between the sensor value reader 2 and the indicator driver 3, and a rapid averaging process constituted by steps S8 and S9 (Fig. 4) is introduced before step S4.

The rapid averaging unit 7, in step S8 of Fig. 4, receives a limited, small number of data items (Rsil, ..., Rsi4) in a very short time from among the latest data Rs detected by the sensor value reader 2. In step S9, the rapid averaging unit 7 averages the received data items. Illustratively, the most recent four items of the data Rs detected by the sensor value reader 2 are selected every 0.2 seconds, acquired and averaged into an arithmetic mean. In general, 2n data items in binary notation are averaged into an arithmetic mean by carrying out as many as "n" shift operations. That is, averaging four data items requires performing only two shift operations.

Arithmetic means are thus acquired very rapidly and in a constant time period for each averaging process.

If the rapid averaging unit 7 for averaging four detected data items is to be constituted by hardware, only a single adder and a few shift registers are needed. The components are inexpensive when assembled and they operate at a consistent, high speed.

As described, the second embodiment receives a limited, small number of data items (Rsil, ..., Rsi4) in a very short time from among the latest data Rs detected by the sensor value reader 2, and averages the data items thus gained. Even if apparently abnormal values are detected, the embodiment with its averaging process is capable of indicating level data minimally affected thereby and with little time lag.

In a modification of the second embodiment, the rapid averaging unit 7 may be placed interposingly between the fuel sensor 1 and the sensor value reader 2, the averaging unit being constituted by a CR filter having a consistent, very small time constant. The CR filter serves rapidly to smooth out variations of the detection signals from the fuel sensor 1.

The inventive liquid level gauge may be mounted on the vehicle preferably as follows: the vehicle speed judging unit 5, indicator driver 3 and fuel level indicator 6 shown in Fig. 1 are to be housed in a case that accommodates a speedometer, and vehicle speed judging means used by the speedometer is to double as the vehicle speed judging means 5 for fuel level indication. The setup allows the indicator driver 3 to be located near the vehicle speed judging means of the speedometer. The manner in which the indicator driver 3 is installed here involves shorter wiring, fewer parts and hence lower manufacturing cost than if the indicator driver 3 were housed in an enclosure separate from the case accommodating the speedometer. In particular, if the speedometer is an electrically operated meter, the above arrangement is all the more advantageous in that it places the vehicle speed judging unit, indicator driver and other related parts on the same circuit board for speed indication.

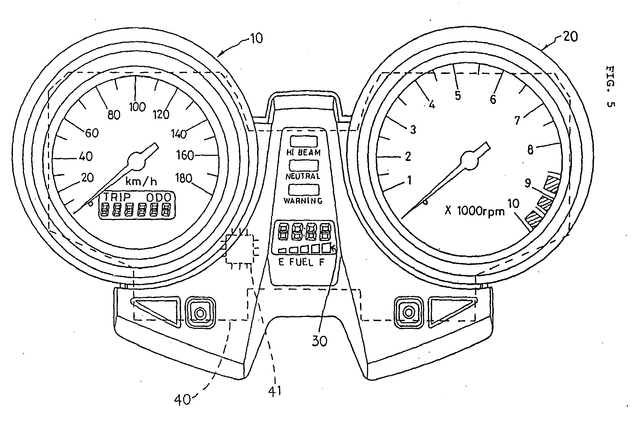

Fig. 5 shows a typical fuel level gauge mounted on a vehicle. Between a speedometer 10 and a tachometer 20 is a fuel level gauge 30 giving bar graph indications. The case of the speedometer 10 contains circuit board whose shape is indicated in broken lines 40. A driving circuit (LSI) for the fuel level gauge 30 may be positioned in a given region (e.g., position 41) on the circuit board.

Data detected in analog form by a fuel sensor 1 is converted to digital signals by a sensor value reader 2. An indicator driver 3 receives time signals from a timer 4 and speed signals from a vehicle speed sensor 5 and, in a suitably timed manner reflecting the vehicle speed, calculates fuel level data to be indicated based on the digital signals. The fuel level data thus calculated is indicated on a fuel level indicator 6. For example, the fuel level data is updated at intervals of one second if the vehicle speed is less than 4 km/h and at intervals of 15 seconds if the vehicle speed is at least 4 km/h. The indicator driver 3 calculates the fuel level data using the digital signals unmodified or through a rapid averaging process of the signals, whereby the fuel level is indicated with little or no time lag.

## Claims

1. A motorcycle having a liquid level gauge, comprising:
a liquid tank mounted on board motorcycle.
liquid level detecting means (1) for detecting a level of a liquid held in said liquid tank and for generating detection signals reflecting the detected level;
indicator driving means (3) for calculating, based on said detection signals, a liquid level value to be indicated which represents a detected liquid level;
liquid level indicating means (6) driven by said indicator driving means (3) for indicating said calculated liquid level value; and
vehicle speed judging means (5) for judging a speed of said vehicle;
wherein said indicator driving means (3) comprises interval varying means for varying intervals at which the indication of said liquid level value on said liquid level indicating means (6) is updated on the basis of judgments by said vehicle speed judging means (5); as well as
liquid level value calculating means for calculating said liquid level value to be indicated based on detection signals read from said liquid level detecting means (1),
wherein a time period for calculation of said liquid level value is shorter than the updating intervals of said indication of said liquid level value on said liquid level indicating means (6),
**characterized in that**
the indicator driving means (3) further comprises retaining means for temporarily retaining said calculated liquid level value, wherein the time period for temporarily retaining said calculated liquid level value depends on said vehicle speed.

2. A motorcycle having a liquid level gauge according to claim 1, wherein said liquid level value to be indicated is calculated by said value calculating means based directly on detection signals read from said liquid level detecting means (1) at least when said speed of said vehicle is low.

3. A motorcycle having a liquid level gauge according to claim 1, wherein said liquid level value to be indicated is calculated by said value calculating means based on a specific number of detection signals read from said liquid level detecting means (1).

4. A motorcycle having a liquid level gauge according to any one of claims 1 through 3, further comprising smoothing means (7) for smoothing said detection signals from said liquid level detecting means (1).

5. A motorcycle having a liquid level gauge according to any one of claims 1 through 4, wherein said intervals at which to update said liquid level value indicated on said liquid level indicating means (6) are one second at most when said speed of said vehicle is less than five kilometers per hour, and are between five and sixty seconds when said speed of said vehicle is at least five kilometers per hour.

6. A motorcycle having a liquid level gauge according to any one of claims 1 through 5, wherein at least said vehicle speed judging means (5), said indicator driving means (3) and said liquid level indicating means (6) are housed in a case which accommodates a speedometer (10).

7. A motorcycle having a liquid level gauge according to any one of claims 1 through 6, wherein said liquid level gauge furthermore comprises an averaging unit (7) interposed between said liquid level detecting means (1) and said indicator driving means (3) for averaging a limited, small number of detection signals.

## Patentansprüche

1. Kraftrad mit einem Flüssigkeitsniveaumessgerät, umfassend:
einen Flüssigkeitstank, welcher an dem Kraftrad angebracht ist;
ein Flüssigkeitsniveauerfassungsmittel (1), um ein Niveau einer in dem Flüssigkeitstank enthaltenen Flüssigkeit zu erfassen und Erfassungssignale zu erzeugen, welche das erfasste Niveau reflektieren;
ein Anzeigeantriebsmittel (3), um basierend auf den Erfassungssignalen einen anzuzeigenden Flüssigkeitsniveauwert zu berechnen, welcher ein erfasstes Flüssigkeitsniveau verkörpert;
ein Flüssigkeitsniveauanzeigemittel (6), welches durch das Anzeigeantriebsmittel (3) angetrieben wird, um den berechneten Flüssigkeitsniveauwert anzuzeigen; und
ein Fahrzeuggeschwindigkeitsbeurteilungsmittel (5), um eine Geschwindigkeit des Fahrzeugs zu beurteilen;
wobei das Anzeigeantriebsmittel (3) ein Intervallveränderungsmittel umfasst, um Intervalle zu verändern, in welchen die Anzeige von dem Flüssigkeitsniveauwert auf dem Flüssigkeitsniveauanzeigemittel (6) aktualisiert wird, auf der Basis von Beurteilungen durch das Fahrzeuggeschwindigkeitsbeurteilungsmittel (5); wie auch ein Flüssigkeitsniveauwertberechnungsmittel, um den Flüssigkeitsniveauwert zu berechnen, welcher basierend auf Erfassungssignalen anzuzeigen ist, welche von dem Flüssigkeitsniveauerfassungsmittel (1) gelesen werden,
wobei eine Zeitperiode zur Berechnung des Flüssigkeitsniveauwerts kürzer als die Aktualisierungsintervalle von der Anzeige von dem Flüssigkeitsniveauwert auf dem Flüssigkeitsniveauanzeigemittel (6) ist,
**dadurch gekennzeichnet, dass** das Anzeigeantriebsmittel (3) ferner Haltemittel umfasst, um den berechneten Flüssigkeitsniveauwert vorübergehend zu halten, wobei die Zeitperiode, um den berechneten Flüssigkeitsniveauwert vorübergehend zu halten, von der Fahrzeuggeschwindigkeit abhängt.

2. Kraftrad mit einem Flüssigkeitsniveaumessgerät nach Anspruch 1, wobei der anzuzeigende Flüssigkeitsniveauwert von dem Wertberechnungsmittel direkt basierend auf Erfassungssignalen berechnet wird, welche von dem Flüssigkeitsniveauerfassungsmittel (1) gelesen werden, wenigstens dann, wenn die Geschwindigkeit des Fahrzeugs niedrig ist.

3. Kraftrad mit einem Flüssigkeitsniveaumessgerät nach Anspruch 1, wobei der anzuzeigende Flüssigkeitsniveauwert von dem Wertberechnungsmittel basierend auf einer speziellen Anzahl von Erfassungssignalen berechnet wird, welche von dem Flüssigkeitsniveauerfassungsmittel (1) gelesen werden.

4. Kraftrad mit einem Flüssigkeitsniveaumessgerät nach einem der Ansprüche 1 bis 3, ferner umfassend ein Glättungsmittel (7), um die Erfassungssignale von dem Flüssigkeitsniveauerfassungsmittel (1) zu glätten.

5. Kraftrad mit einem Flüssigkeitsniveaumessgerät nach einem der Ansprüche 1 bis 4, wobei die Intervalle, in welchen der Flüssigkeitsniveauwert aktualisiert werden soll, welcher auf dem Flüssigkeitsniveauanzeigemittel (6) angezeigt wird, höchstens 1 Sekunde betragen, wenn die Geschwindigkeit des Fahrzeugs kleiner als 5 Kilometer pro Stunde beträgt, und zwischen 5 und 60 Sekunden betragen, wenn die Geschwindigkeit des Fahrzeugs wenigstens 5 Kilometer pro Stunde beträgt.

6. Kraftrad mit einem Flüssigkeitsniveaumessgerät nach einem der Ansprüche 1 bis 5, wobei wenigstens das Fahrzeuggeschwindigkeitsbeurteilungsmittel (5), das Anzeigeantriebsmittel (3) und das Flüssigkeitsniveauanzeigemittel (6) in einem Gehäuse untergebracht sind, welches einen Geschwindigkeitsmesser (10) aufnimmt.

7. Kraftrad mit einem Flüssigkeitsniveaumessgerät nach einem der Ansprüche 1 bis 6, wobei das Flüssigkeitsniveaumessgerät ferner eine Mittelwertbildungseinheit (7) umfasst, welche zwischen dem Flüssigkeitsniveauerfassungsmittel (1) und dem Anzeigeantriebsmittel (3) angeordnet ist, um den Mittelwert einer begrenzten kleinen Anzahl von Erfassungssignalen zu bilden.

## Revendications

1. Motocyclette ayant une jauge de niveau de liquide, comprenant :
un réservoir de liquide monté à bord de la motocyclette ;
un moyen de détection de niveau de liquide (1) pour détecter un niveau d'un liquide contenu dans ledit réservoir de liquide et pour générer des signaux de détection reflétant le niveau détecté ;
un moyen de commande d'indicateur (3) pour calculer, sur la base desdits signaux de détection, une valeur de niveau de liquide à indiquer qui représente un niveau de liquide détecté ;
un moyen d'indication de niveau de liquide (6) commandé par ledit moyen de commande d'indicateur (3) pour indiquer ladite valeur de niveau de liquide calculée ; et
un moyen de jugement de vitesse de véhicule (5) pour juger une vitesse dudit véhicule ;
dans laquelle ledit moyen de commande d'indicateur (3) comprend un moyen de variation d'intervalles pour faire varier des intervalles auxquels l'indication de ladite valeur de niveau de liquide sur ledit moyen d'indication de niveau de liquide (6) est mise à jour sur la base de jugements par ledit moyen de jugement de vitesse de véhicule (5) ; ainsi que
un moyen de calcul de valeur de niveau de liquide pour calculer ladite valeur de niveau de liquide à indiquer sur la base des signaux de détection lus dudit moyen de détection de niveau de liquide (1),
dans laquelle une période de temps de calcul de ladite valeur de niveau de liquide est plus courte que les intervalles de mise à jour de ladite indication de ladite valeur de niveau de liquide sur ledit moyen d'indication de niveau de liquide (6),
**caractérisée en ce que**
le moyen de commande d'indicateur (3) comprend en outre un moyen de rétention pour retenir provisoirement ladite valeur de niveau de liquide calculée, dans laquelle la période de temps pour retenir provisoirement ladite valeur de niveau de liquide calculée dépend de ladite vitesse de véhicule.

2. Motocyclette ayant une jauge de niveau de liquide selon la revendication 1, dans laquelle ladite valeur de niveau de liquide à indiquer est calculée par ledit moyen de calcul de valeur sur la base directement des signaux de détection lus dudit moyen de détection de niveau de liquide (1) au moins lorsque ladite vitesse dudit véhicule est basse.

3. Motocyclette ayant une jauge de niveau de liquide selon la revendication 1, dans laquelle ladite valeur de niveau de liquide à indiquer est calculée par ledit moyen de calcul de valeur sur la base d'un nombre spécifique de signaux de détection lus dudit moyen de détection de niveau de liquide (1).

4. Motocyclette ayant une jauge de niveau de liquide selon l'une quelconque des revendications 1 à 3, comprenant en outre un moyen de lissage (7) pour lisser lesdits signaux de détection dudit moyen de détection de niveau de liquide (1).

5. Motocyclette ayant une jauge de niveau de liquide selon l'une quelconque des revendications 1 à 4, dans laquelle lesdits intervalles auxquels mettre à jour ladite valeur de niveau de liquide indiquée sur ledit moyen d'indication de niveau de liquide (6) sont d'au plus une seconde lorsque ladite vitesse dudit véhicule est inférieure à cinq kilomètres par heure, et sont entre cinq et soixante secondes lorsque ladite vitesse dudit véhicule est d'au moins cinq kilomètres par heure.

6. Motocyclette ayant une jauge de niveau de liquide selon l'une quelconque des revendications 1 à 5, dans laquelle au moins ledit moyen de jugement de vitesse de véhicule (5), ledit moyen de commande d'indicateur (3) et ledit moyen d'indication de niveau de liquide (6) sont logés dans un boîtier qui héberge un compteur de vitesse (10).

7. Motocyclette ayant une jauge de niveau de liquide selon l'une quelconque des revendications 1 à 6, dans laquelle ladite jauge de niveau de liquide comprend en outre une unité de calcul de moyenne (7) interposée entre ledit moyen de détection de niveau de liquide (1) et ledit moyen de commande d'indicateur (3) pour calculer une moyenne d'un petit nombre limité de signaux de détection.
